# EUROPÄISCHE PATENTSCHRIFT

(11) **EP 0 880 878 B1**
(45) Veröffentlichungstag und Bekanntmachung des Hinweises auf die Patenterteilung: **27.02.2002**
(21) Anmeldenummer: 98108963.4
(22) Anmeldetag: 16.05.1998
(51) Int. Cl.: A01C 23/04, A01C 21/00

(54) **Verfahren zum Düngen eines Rasens**
Method for fertilising a lawn
Méthode de fertilisation d'un gazon

(30) Priorität: 31.05.1997 DE 19722869
(43) Veröffentlichungstag der Anmeldung: 02.12.1998
(73) Patentinhaber: Rogmann, Heiner, 47625 Kevelaer (DE)
(72) Erfinder: Rogmann, Heiner, 47625 Kevelaer (DE)
(74) Vertreter: Funken, Josef, Dipl.-Ing.

(56) Entgegenhaltungen:
- EP-A- 0 161 395
- CN-A- 1 110 265
- US-A- 3 669 357
- DATABASE WPI Section Ch, Week 8702 Derwent Publications Ltd., London, GB; Class C04, AN 87-011736 XP002098112 & JP 61 270289 A (KYOWA HAKKO KOGYO KK) , 29. November 1986

## Beschreibung

Die Erfindung betrifft ein Verfahren zum Düngen eines wenigstens zeitweise im Schatten liegenden Rasens, wobei das Düngemittel in flüssiger Form auf den Rasen bzw. auf die Blätter der Rasenpflanzen aufgebracht wird.

Die heutige Nährstoffversorgung der Pflanzengräser basiert darauf, daß den Pflanzengräsern die Nährstoffe insbesondere durch Stickstoffdüngung, Phosphatdüngung und/oder Kalidüngung zur Verfügung gestellt werden.

Durch die Stickstoffdüngung erhält die Rasenpflanze Stickstoff in Form von Nitrat (NO₃⁻) oder Ammonium (NH₄⁻). Bei der Phosphatdüngung bzw. die Kalidüngung wird dem Rasen Phosphat (P₂O₅) bzw. Kali (K₂O) zur Verfügung gestellt. Hierbei können diese Nährstoffe bzw. Düngestoffe den Rasenpflanzen über die Blätter oder über die Wurzeln zugeführt werden.

Diese bekannten Pflanzennährstoffe werden in der Pflanze durch die Photosynthese von einer anorganischen in eine organische Form umgewandelt. Hierbei stellt die anorganische Form die energieärmere und die organische Form die energiereichere Form dar. Die durch die Photosynthese entstandenen energiereicheren Formen der Pflanzennährstoffe, nämlich die Pflanzenassimilate, werden von der Pflanze zur Bildung von Blattmasse und Wurzelmasse an dem Meristemgewebe benötigt.

An welcher Stelle der Pflanze die Assimilate überwiegend benötigt werden, liegt zum einen an den inneren Wachstumsfaktoren der Pflanze, nämlich ihrer genetischen Veranlagung, und zum anderen an den äußeren Wachstumsfaktoren der Pflanze, nämlich der Versorgung mit Wasser, Energie, wie Licht und Wärme, und Nährstoffen.

Bei Rasengräsern ist es bekannt, daß bei Lichtmangel das Blattwachstum verstärkt gefördert, aber das Wurzelwachstum im gleichen Verhältnis eingeschränkt wird. Dies wird durch die sich in der Pflanze befindlichen Konzentrationen an Nährstoffen, wie beispielsweise Nitrat, und an Assimilaten, wie beispielsweise Saccherosen, Amminosäuren und Proteinen, gesteuert. Je höher die Konzentration an Nährstoffen in der Pflanze ist, um so höher ist der Aufwand der Rasenpflanze an Assimilaten zur Bildung von Blattmasse. Je höher die Konzentration an Assimilaten in der Pflanze ist, um so höher ist das Bestreben der Pflanze, Wurzeln zu bilden, um Nährstoffe aufzunehmen.

Da ein Rasen regelmäßig gemäht wird, wird dadurch die Menge der Blattmasse der Rasenpflanzen ebenfalls regelmäßig reduziert. Durch die Reduzierung der Blattmasse wird entsprechend die Fläche der Blätter verringert, so daß dadurch ebenfalls die Photosynthese entsprechend eingeschränkt wird, wodurch die Aufnahme von Lichtenergie durch die Pflanze ebenfalls entsprechend stark reduziert wird. Die Pflanze paßt bei regelmäßigem Rasenschnitt die Wurzelmasse der produzierten Assimilationsrate der Blattmasse an, falls optimale Bodenverhältnisse vorliegen.

Wenn die Rasenfläche in einem Schatten- oder Dunkelbereich liegt, so verschiebt sich das Verhältnis der Blattmasse zur Wurzelmasse.

Je weniger Lichtenergie die Rasenpflanze aufnehmen kann, um so weniger Nährsalze, beispielsweise Nitrat, können durch die Photsynthese in Pflanzenassimilate umgewandelt werden.

Die Folge davon ist eine Verschiebung des Gleichgewichts in der Pflanze an Nährstoffen und Assimilaten. Dabei steigt die Konzentration an Nährstoffen in der Rasenpflanze, während die Konzentration an Pflanzenassimilaten sinkt. Aufgrund dieser Gleichgewichtsverschiebung zwischen Nährstoffen und Assimilaten produziert die Pflanze mehr Blattmasse, um die vorhandene hohe Nährstoffkonzentration durch die in den Blättern ablaufende Photosynthese in von der Pflanze benötigte Assimilate umzuwandeln. Hierbei benötigt die Pflanze die zur Verfügung stehenden Assimilate zur Produktion von Blattmasse, während gleichzeitig das Wachstum der Wurzeln vernachlässigt wird, und zwar je nach Größe des Lichtmangels.

Erhält jedoch umgekehrt die Rasenpflanze viel Licht zur Photosynthese und ist die Nährstoffversorgung der Pflanze ausreichend, so daß die Assimilate leichtes Übergewicht erreichen, so verwendet die Rasenpflanze die Assimilate überwiegend zur Bildung von Wurzeln.

Die Belastbarkeit einer Rasensportfläche beispielsweise eines Fußballstadions hängt sehr stark von der Wurzelausbildung der Rasengräser ab. Bei schwacher Wurzelausbildung der Rasengräser ist die Rasensportfläche nur sehr bedingt belastbar, so daß es durch den Sportbetrieb auf derartigen Rasensportflächen zu großen Schäden der Rasensportfläche kommt. Ein Grund für eine schwache Wurzelausbildung ist ein starker Lichtmangel.

Mit den bekannten Düngemitteln oder Düngesystemen wird die Rasenpflanze über die Wurzeln oder über die Blätter mit Nährstoffen versorgt, die die Pflanze für die Photosynthese benötigt.

Der Erfindung liegt die Aufgabe zugrunde, eine Düngung bzw. Rasenernährung anzugeben, mit der auch Rasen an stark beschatteten Standorten eine gute Wurzelausbildung erreichen und als Rasensportflächen entsprechend belastbar sind.

Diese Aufgabe wird erfindungsgemäß dadurch gelöst, daß Pflanzenassimilate auf den Rasen bzw. auf die Blätter der Rasenpflanzen aufgebracht werden.

Auf diese Weise gelangt man zu einem Rasen, dem die aufgrund nur schwach ablaufender Photosynthese fehlenden Pflanzenassimilate unmittelbar über die Blätter zugeführt werden. Das bedeutet, daß auch ein im Schatten liegender Rasen sich so ausbildet, als sei er unbeschattet und könnte eine übliche Photosynthese durchführen. Bei solchen gut belastbaren Rasensportflächen beispielsweise von Fußballstadien kommt es nicht mehr vor, daß sich Rasenteile fladenweise vom Rasen ablösen.

Die Assimilate dringen durch Diffusion durch das Blatt in die Pflanze und stehen ihr dort sofort zum Zellenaufbau und mithin zum Körperaufbau zur Verfügung, und zwar zur Bildung von Blattmasse und Wurzelmasse. Hierdurch wird einem durch Lichtmangel entstandenen Ungleichgewicht zwischen Nährstoffen und Assimilaten wirkungsvoll begegnet.

Zweckmäßig bestehen die Pflanzenassimilate überwiegend aus Saccharosen und im übrigen aus Proteinen und/oder Aminosäuren.

Außerdem empfiehlt es sich, daß die Pflanzenassimilate in Wasser gelöst und mit Hilfe eines Formulierungsmittels auf die Blätter der Rasenpflanzen gebracht werden.

## Patentansprüche

1. Verfahren zum Düngen eines wenigstens zeitweise im Schatten liegenden Rasens, wobei das Düngemittel in flüssiger Form auf den Rasen bzw. auf die Blätter der Rasenpflanzen aufgebracht wird, **dadurch gekennzeichnet, daß** Pflanzenassimilate auf den Rasen bzw. auf die Blätter der Rasenpflanzen aufgebracht werden.

2. Verfahren nach Anspruch 1, **dadurch gekennzeichnet, daß** die Pflanzenassimilate überwiegend aus Saccharosen und im übrigen aus Proteinen und/oder Aminosäuren bestehen.

3. Verfahren nach Anspruch 1 oder 2, **dadurch gekennzeichnet, daß** die Pflanzenassimilate in Wasser gelöst und mit Hilfe eines Formulierungsmittels auf die Blätter der Rasenpflanzen gebracht werden.

## Claims

1. A method of fertilising grass which at least at times is in shadow, wherein the fertiliser is applied in liquid form to the grass or to the blades of the grass plants, **characterised in that** plant assimilates are applied to the grass or to the blades of the grass plants.

2. A method according to claim 1 **characterised in that** the plant assimilates predominantly comprise sacchoroses and otherwise proteins and/or amino acids.

3. A method according to claim 1 or claim 2 **characterised in that** the plant assimilates are dissolved in water and applied to the blades of the grass plants by means of a formulation agent.

## Revendications

1. Procédé pour fertiliser un gazon situé au moins en partie à l'ombre, dans lequel l'engrais est appliqué sous forme liquide sur le gazon ou sur les feuilles des végétaux du gazon, **caractérisé en ce qu'**on applique des produits de phyto-assimilation sur le gazon ou sur les feuilles des végétaux du gazon.

2. Procédé selon la revendication 1, **caractérisé en ce que** les phyto-assimilateurs sont principalement constitués de saccharoses et pour le reste de protéines et/ou d'acides aminés.

3. Procédé selon la revendication 1 ou 2, **caractérisé en ce que** les produits de phyto-assimilation sont solubles dans l'eau et sont appliqués sur les feuilles des végétaux du gazon à l'aide d'un agent de formulation.
